# EUROPEAN PATENT SPECIFICATION

(11) **EP 3 252 086 B1**
(45) Date of publication and mention of the grant of the patent: **19.06.2024**
(21) Application number: 16752592.2
(22) Date of filing: 19.02.2016
(51) Int. Cl.: C08F 214/26, B01D 69/02, B01D 71/32, B01D 71/34, B01D 71/44, C08F 214/28, C08F 226/10, C09D 5/16

(54) **COPOLYMER, HYDROPHILIZING AGENT, COMPOSITION CONTAINING HYDROPHILIZING AGENT, AND POROUS POLYMER FILM**
COPOLYMER,HYDROPHILIERUNGSMITTEL, ZUSAMMENSETZUNG MIT HYDROPHILIERUNGSMITTE UND PORÖSER POLYMERFILM
COPOLYMÈRE, AGENT D'HYDROPHILISATION, COMPOSITION CONTENANT LEDIT AGENT D'HYDROPHILISATION, ET FILM POLYMÈRE POREUX

(30) Priority: 20.02.2015 JP 2015031982; 16.06.2015 JP 2015121324
(43) Date of publication of application: 06.12.2017
(73) Proprietor: Daikin Industries, Ltd., Osaka-shi, Osaka 530-0001 (JP)
(72) Inventor: KANBARA, Tadashi, Osaka-shi Osaka 530-8323 (JP); TANAKA, Yoshito, Osaka-shi Osaka 530-8323 (JP); OHMUKAI, Yoshikage, Osaka-shi Osaka 530-8323 (JP); SHIOTANI, Yuko, Osaka-shi Osaka 530-8323 (JP); MOHRI, Haruhiko, Osaka-shi Osaka 530-8323 (JP); MIKI, Jun, Osaka-shi Osaka 530-8323 (JP)
(74) Representative: Hoffmann Eitle
(86) International application number: PCT/JP2016/054907
(87) International publication number: WO 2016/133206

(56) References cited:
- EP-A1- 1 621 573
- EP-A1- 2 784 108
- EP-A1- 3 015 506
- EP-A2- 0 312 834
- JP-A- H01 108 270
- JP-A- H01 144 409
- JP-A- 2011 032 341
- US-A- 5 354 587
- US-A1- 2012 148 818

## Description

### TECHNICAL FIELD

The invention relates to a hydrophilizing agent, a composition containing the hydrophilizing agent and a polymer, and a porous polymer film containing the hydrophilizing agent and a polymer. The invention also relates to a novel copolymer.

### BACKGROUND ART

Porous polymer films containing vinylidene fluoride resin are known as porous polymer films used in the field of water treatment. Vinylidene fluoride resin is hydrophobic, and a method of improving the hydrophilicity and low-fouling performance of porous polymer films containing vinylidene fluoride resin is known in which a hydrophilic polymer is added as a hydrophilizing agent to vinylidene fluoride resin and then the vinylidene fluoride resin is formed into a porous polymer film.

Patent Literature 1 discloses addition of an amphiphilic block copolymer having at least one hydrophilic block and at least one hydrophobic block compatible with the polymer matrix so as to impart uniform and stable hydrophilicity.

Patent Literature 2 discloses that use of a graft copolymer containing an acrylate polymer and/or a methacrylate polymer in the main chain and an ethylene oxide polymer and/or a propylene oxide polymer in a side chain(s) enables hydrophilization of a film and imparts low-fouling performance.

Patent Literature 3 discloses a porous polymer membrane containing a copolymer (A) containing vinyl alcohol units and tetrafluoroethylene units, wherein an alternation ratio of the vinyl alcohol units and the tetrafluoroethylene units is at least 30%, and a vinylidene fluoride-based resin.

Although it does not disclose a porous polymer film, Patent Literature 4 discloses a coating composition capable of providing a coating layer being free from a deterioration of the outer appearance by rain and wind. The coating composition contains a fluorine-containing copolymer obtained by copolymerizing a fluoromonomer, an N-vinyl-lactam compound, a monomer having a cross-linkable functional group, and other monomers copolymerizable therewith.

### CITATION LIST

### - Patent Literature

Patent Literature 1: JP 2012-506772 T
Patent Literature 2: JP 2007-723 A
Patent Literature 3: JP 2013-151671 A
Patent Literature 4: JP H01-108270 A
Patent Literature 5: JP 5142718 B
Patent Literature 6: JP H01-144409 A

### - Non Patent Literature

Non Patent Literature 1: CAO JIN, and two others, "Radiation-Induced Copolymerization of N-Vinylpyrrolidone with Monochlorotrifluoroethylene", JOURNAL OF MACROMOLECULAR SCIENCE-Chemistry, 1985, A22(e), p.379-386
Additional relevant prior art documents are EP 0 312 834 A2, EP 1 621 573 A1 and EP 2 784 108 A1.

### SUMMARY OF INVENTION

### - Technical Problem

The invention, as defined in appended claims 1-12, aims to provide a hydrophilizing agent which is to be added to a polymer having a large contact angle to produce a porous polymer film that has a small contact angle and that can maintain this small contact angle even after 168-hour contact with an aqueous sodium hypochlorite solution.

### - Solution to Problem

The inventors found out that adding a hydrophilizing agent comprising the copolymer of claim 1 and having a contact angle of 50° or smaller and a weight reduction rate of 7% or lower to a polymer having a large contact angle enables production of a porous polymer film that has a small contact angle and that can maintain this small contact angle even after 168-hour contact with an aqueous sodium hypochlorite solution, and thereby completed the invention.

Specifically, the invention relates to a hydrophilizing agent containing a fluoropolymer having a contact angle of 50° or smaller and a weight reduction rate of 7% or lower.

The fluoropolymer preferably has a softening point of 70°C to 200°C.

Said fluoropolymer is a copolymer of a fluoromonomer and an amide bond-containing polymerizable vinyl compound, as described in claim 1.

The fluoropolymer preferably has a fluorine content of 5 mass% or more.

The hydrophilizing agent is preferably a hydrophilizing agent for a polymer other than the hydrophilizing agent.

The hydrophilizing agent is preferably a hydrophilizing agent for a porous polymer film.

The invention also relates to a composition containing the above hydrophilizing agent and a polymer other than the hydrophilizing agent.

The invention also relates to a porous polymer film containing the above hydrophilizing agent and a polymer other than the hydrophilizing agent.

The porous polymer film preferably has a contact angle of 55° or smaller.

The invention also relates to a hydrophilizing agent containing a copolymer of claim 1.

The invention also relates to the copolymer containing at least one fluoromonomer selected from the group consisting of tetrafluoroethylene and hexafluoropropylene and an amide bond-containing polymerizable vinyl compound, according to claim 1.

### - Advantageous Effects of Invention

Since the hydrophilizing agent of the invention has the aforementioned structure, the hydrophilizing agent, when added to a polymer having a large contact angle, enables production of a porous polymer film that has a small contact angle and that can maintain this small contact angle even after 168-hour contact with an aqueous sodium hypochlorite solution. Also, the hydrophilizing agent of the invention enables production of a porous polymer film having excellent water permeability and fouling resistance.

Since the composition of the invention has the aforementioned structure, it enables production of a porous polymer film that has a small contact angle and that can maintain this small contact angle even after 168-hour contact with an aqueous sodium hypochlorite solution. Also, the composition enables production of a porous polymer film having excellent water permeability and fouling resistance.

The porous polymer film containing the hydrophilizing agent of the invention has a small contact angle and can maintain this small contact angle even after 168-hour contact with an aqueous sodium hypochlorite solution. The porous polymer film also has excellent water permeability and fouling resistance.

### DESCRIPTION OF EMBODIMENTS

The invention will be described in detail hereinbelow.

The hydrophilizing agent of the invention contains a according to claim 1 and having a contact angle of 50° or smaller and a weight reduction rate of 7% or lower.

The fluoropolymer preferably has a fluorine content of 5 mass% or more. Too low a fluorine content in the fluoropolymer may cause an increase in the weight reduction rate, possibly causing a failure in maintaining the hydrophilicity for a long period of time. The fluorine content is more preferably 14 mass% or more, while preferably 48 mass% or less, more preferably 40 mass% or less.

The fluorine content is determined by elemental analysis.

Too large a contact angle of the fluoropolymer (the contact angle of a film consisting only of the fluoropolymer) makes it impossible to produce a porous polymer film that has a small contact angle even when the fluoropolymer is added to a polymer having a large contact angle.

The contact angle in the invention is calculated as "contact angle = 180° - θ" wherein θ represents the bubble contact angle in water.

The contact angle is determined as follows. A solution of the fluoropolymer is spin-coated on a silicon wafer at 2000 rpm, for example, and heat-dried to form a smooth surface of the polymer. The resulting silicon wafer is then immersed in deionized water for five hours. A 3-µl bubble is brought into contact with the polymer surface in water at 25°C, and the contact angle in water is measured.

The fluoropolymer having too high a weight reduction rate is easily eluted from the porous polymer film, and thus the porous polymer film fails to maintain the small contact angle. On the contrary, with a weight reduction rate within the above range, the porous polymer film can maintain the small contact angle even after washed with an aqueous sodium hypochlorite solution.

The weight reduction rate is a value calculated from the following formula: Weight reduction rate = 100 - (weight of fluoropolymer after immersed in aqueous sodium hypochlorite (NaClO) solution)/(weight of fluoropolymer before immersed in aqueous NaClO solution) × 100.

The weight of the fluoropolymer after immersed in an aqueous NaClO solution means the weight of the fluoropolymer obtained as follows. The fluoropolymer (sample) is immersed in an aqueous solution containing 5000 ppm of NaClO (sodium hydroxide is added thereto so as to adjust the pH to 13) at 20°C for 168 hours. The fluoropolymer is taken out and dried at 60°C for 15 hours.

The sample is a film obtainable by casting a polymer solution containing 13 mass% of the fluoropolymer in a laboratory dish having a diameter of about 58 mm.

The fluoropolymer preferably has a softening point of 70°C to 200°C, more preferably 80°C or higher, still more preferably 100°C or higher, particularly preferably 120°C or higher, while more preferably 180°C or lower, still more preferably 170°C or lower. The fluoropolymer having a softening point within the above range enables production of a porous polymer film having excellent strength.

The softening point of the polymer in the invention means the melting point for crystallizable polymers, or means the glass transition temperature for non-crystallizable polymers. These values are determined as follows. The polymer softening point is defined as the melting point (Tm) or the glass transition temperature (Tg) determined by differential scanning calorimetry. For crystallizable polymers, 10 mg of polymer powder is subjected to measurement using a differential scanning calorimeter (DSC) or simultaneous thermogravimetric analyzer (TG/DTA) within a temperature range of -50°C to 200°C and at a temperature-increasing rate of 10°C/min. The melting point corresponding to the melting peak is read. For non-crystallizable polymers, the glass transition completion temperature is read from the thermogram of the 2nd cycle in the measurement within a temperature range of -50°C to 200°C and at a temperature-increasing rate of 10°C/min.

The fluoropolymer is a copolymer of a fluoromonomer and an amide bond-containing polymerizable vinyl compound, as described in claim 1. The copolymer has the above contact angle and the above weight reduction rate. Since the copolymer satisfies these parameters, it is expected to exhibit excellent low fouling resistance and low-fouling performance as a hydrophilizing agent. The copolymer is also expected to exhibit high durability. Thus, a porous polymer film containing the copolymer as a hydrophilizing agent is also expected to exhibit excellent low fouling resistance, low-fouling performance, and high durability.

The copolymer is a copolymer containing the above mentioned fluoromonomer unit and an amide bond-containing polymerizable vinyl compound unit, and is also referred to as a fluoromonomer/amide bond-containing polymerizable vinyl compound copolymer herein.

In order to provide a porous polymer film that has a small contact angle, the fluoromonomer/amide bond-containing polymerizable vinyl compound copolymer satisfies that the fluoromonomer unit represents 55 to 15 mol% and the amide bond-containing polymerizable vinyl compound unit represents 45 to 85 mol%. Still more preferably, the fluoromonomer unit represents 45 to 20 mol% and the amide bond-containing polymerizable vinyl compound unit represents 55 to 80 mol%.

More than 93 mol% of the amide bond-containing polymerizable vinyl compound unit may significantly impair the water resistance. Further, the weight reduction rate may increase, possibly causing a failure in maintaining the hydrophilicity for a long period of time. Less than 35 mol% of the amide bond-containing polymerizable vinyl compound unit may cause poor hydrophilicity of the resulting porous polymer film.

In particular, the mole ratio of the fluoromonomer unit to the amide bond-containing polymerizable vinyl compound unit (fluoromonomer unit/amide bond-containing polymerizable vinyl compound unit) preferably falls within the range of 0.07 to 1.50, more preferably within the range of 0.25 to 1.25, still more preferably within the range of 0.25 to 0.82. Too low a mole ratio may cause a failure in providing a porous polymer film having excellent durability. Too high a mole ratio may cause a failure in providing a porous polymer film having excellent hydrophilicity. An appropriate mole ratio within the above range leads to a hydrophilizing agent which enables production of a porous polymer film having excellent heat resistance, hydrophilicity, and durability.

The fluoromonomer is at least one selected from the group consisting of tetrafluoroethylene (THE) or hexafluoropropylene (HFP).

The polymerizable vinyl compound contains an amide bond, and preferably further contains a polymerizable vinyl group in addition to the amide bond. The amide bond means a bond between a carbonyl group and a nitrogen atom.

Examples of the polymerizable vinyl group include a vinyl group, an allyl group, a vinyl ether group, a vinyl ester group, and an acryl group.

Examples of the amide bond-containing polymerizable vinyl compound include N-vinyllactam compounds such as N-vinyl-β-propiolactam, N-vinyl-2-pyrrolidone, N-vinyl-γ-valerolactam, N-vinyl-2-piperidone, and N-vinyl-heptolactam; noncyclic N-vinylamide compounds such as N-vinylformamide and N-methyl-N-vinylacetamide; noncyclic N-allyl amide compounds such as N-allyl-N-methylformamide and allylurea; N-allyllactam compounds such as 1-(2-propenyl)-2-pyrrolidone; and acrylamide compounds such as (meth)acrylamide, N,N-dimethylacrylamide, and N-isopropylacrylamide.

The amide bond-containing polymerizable vinyl compound may also be a compound represented by the following formula: 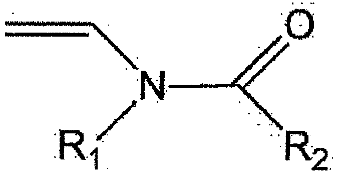 (wherein R₁ and R₂ are each independently H or a C1-C10 alkyl group) or a compound represented by the following formula: 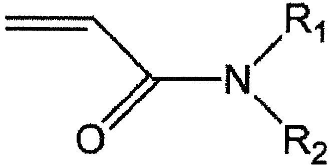 (wherein R₁ and R₂ are each independently H or a C1-C10 alkyl group).

Preferred is an N-vinyllactam compound or a noncyclic N-vinylamide compound, more preferred is at least one selected from the group consisting of N-vinyl-β-propiolactam, N-vinyl-2-pyrrolidone, N-vinyl-γ-valerolactam, N-vinyl-2-piperidone, and N-vinyl-heptolactam, still more preferred is at least one selected from the group consisting of N-vinyl-2-pyrrolidone and N-vinyl-2-piperidone, particularly preferred is N-vinyl-2-pyrrolidone.

The fluoromonomer/amide bond-containing polymerizable vinyl compound copolymer may contain a different monomer unit other than the fluoromonomer unit or the amide bond-containing polymerizable vinyl compound unit unless such a different monomer unit impairs the effects of the invention. Examples of the different monomer unit include vinyl ester monomer units, vinyl ether monomer units, (meth)acrylic monomer units having polyethylene glycol in a side chain, vinyl monomer units having polyethylene glycol in a side chain, (meth)acrylic monomer units having a long-chain hydrocarbon group, and vinyl monomer units having a long-chain hydrocarbon group. The amount in total of the different monomer unit(s) may be 0 to 40 mol%, may be 0 to 30 mol%, may be 0 to 15 mol%, and may be 0 to 5 mol%.

The different monomer unit other than the fluoromonomer unit or the amide bond-containing polymerizable vinyl compound unit is not preferably one having a cross-linkable functional group. This is because the polarity of a cross-linkable functional group impairs the fouling performance.

Examples of the cross-linkable functional group include active hydrogen-containing groups such as a hydroxy group, a carboxylate group, an amino group, and an acid amide group, an epoxy group, a halogen-containing group, and a double bond.

The fluoromonomer/amide bond-containing polymerizable vinyl compound copolymer preferably substantially consists of a fluoromonomer unit and an amide bond-containing polymerizable vinyl compound unit.

The fluoromonomer/amide bond-containing polymerizable vinyl compound copolymer preferably has a weight average molecular weight of 10000 or higher, more preferably 15000 or higher, still more preferably 20000 or higher, particularly preferably 30000 or higher. The weight average molecular weight is more preferably 15000 to 500000, still more preferably 20000 to 300000, particularly preferably 30000 to 300000. The weight average molecular weight can be determined by gel permeation chromatography (GPC). The higher the weight average molecular weight is, the less the copolymer is likely to be eluted into water and the more the copolymer is likely to be contained in the porous polymer film.

The hydrophilizing agent can be formed into a porous polymer film after it is mixed with a polymer other than the hydrophilizing agent and the mixture is molded into a film by the method to be mentioned later. Thus, the hydrophilizing agent is suitable as a hydrophilizing agent for the polymer other than the hydrophilizing agent. Also, the hydrophilizing agent is suitable as a hydrophilizing agent for forming a porous polymer film containing a polymer other than the hydrophilizing agent. The use of the hydrophilizing agent in the production of a porous polymer film containing a polymer other than the hydrophilizing agent is also a suitable use thereof. The porous polymer film will be described later.

The hydrophilizing agent can be formed into a composition when added in an amount of 0.5 to 50 mass% relative to the polymer. The lower limit of the amount is more preferably 5 mass%, still more preferably 10 mass%, while the upper limit thereof is more preferably 30 mass%.

Examples of the polymer include fluorine-containing polymers, polyvinyl chloride, chlorinated polyvinyl chloride, polyethersulfone, polysulfone, polyacrylonitrile, polyethylene, and polypropylene.

The polymer and the hydrophilizing agent may be mixed by any method. Examples of the method include (i) a method of mixing powder of the polymer and powder of the hydrophilizing agent, (ii) a method of mixing dispersion of the polymer and dispersion of the hydrophilizing agent and then co-coagulating the solid, and (iii) a method of mixing powder of the polymer and powder of the hydrophilizing agent, melt-kneading the mixture under a shearing force, and extruding the mixture.

The fluorine-containing polymer is preferably a vinylidene fluoride resin, and is more preferably polyvinylidene fluoride or a copolymer containing a vinylidene fluoride unit. The fluorine-containing polymer which is any of these polymers can be mixed with the hydrophilizing agent by melt-kneading, and thus can be formed into a composition capable of providing a porous polymer film having excellent properties. From this viewpoint, the composition is preferably a composition obtainable by melt-kneading the hydrophilizing agent and polyvinylidene fluoride or a copolymer containing a vinylidene fluoride unit.

From the viewpoints of the mechanical strength and processability of the porous polymer film, the polyvinylidene fluoride preferably has a weight average molecular weight of 30000 to 2000000, more preferably 50000 to 1000000.

The polyvinylidene fluoride may be a homopolymer consisting only of a vinylidene fluoride unit, or may be a modified polymer containing a vinylidene fluoride unit and a different monomer unit. The different monomer in the modified polymer may be a monomer copolymerizable with vinylidene fluoride, and examples thereof include TFE, HFP, CTFE, trifluoroethylene, fluoroalkyl vinyl ethers, fluoroalkylethylenes, trifluoropropylene, pentafluoropropylene, trifluorobutene, tetrafluoroisobutene, hexafluoroisobutene, and fluoromonomers represented by the formula: CH₂=CFRf (where Rf is a C1-C12 linear or branched fluoroalkyl group). The polyvinylidene fluoride preferably satisfies that the mole ratio of the vinylidene fluoride unit to the different monomer unit (vinylidene fluoride unit/different monomer unit) is higher than 99/1 and lower than 100/0.

Examples of the copolymer containing a vinylidene fluoride unit include vinylidene fluoride/tetrafluoroethylene copolymers and vinylidene fluoride/hexafluoropropylene copolymers. From the viewpoints of the mechanical strength and alkali resistance, the copolymer containing a vinylidene fluoride unit is particularly preferably a vinylidene fluoride/tetrafluoroethylene copolymer.

From the viewpoints of the film formability and alkali resistance, the vinylidene fluoride/tetrafluoroethylene copolymer preferably satisfies a mole ratio of the vinylidene fluoride unit to the tetrafluoroethylene unit (vinylidene fluoride unit/tetrafluoroethylene unit) of (50 to 99)/(50 to 1). Examples of this polymer include products of VT series (Daikin Industries, Ltd.). The mole ratio of the vinylidene fluoride unit to the tetrafluoroethylene unit in the vinylidene fluoride/tetrafluoroethylene copolymer is more preferably (50 to 95)/(50 to 5), still more preferably (50 to 90)/(50 to 10). Instead of the vinylidene fluoride/tetrafluoroethylene copolymer consisting only of a vinylidene fluoride unit and a tetrafluoroethylene unit, the vinylidene fluoride/tetrafluoroethylene copolymer may be a ternary or higher copolymer having not only a vinylidene fluoride unit and a tetrafluoroethylene unit but also any of different units such as a hexafluoropropylene unit, a chlorotrifluoroethylene unit, and a perfluorovinyl ether unit, each to the extent that does not impair the properties.

The copolymer containing a vinylidene fluoride unit may have a weight average molecular weight that varies depending on the use of the resulting porous polymer film. From the viewpoint of the mechanical strength and film formability, the weight average molecular weight is preferably 10000 or higher, more preferably 30000 to 2000000, still more preferably 50000 to 1000000, particularly preferably 100000 to 800000. The weight average molecular weight can be determined by gel permeation chromatography (GPC).

The hydrophilizing agent can be formed into a porous polymer film after it is mixed with the polymer and the mixture is molded into a film by the method to be mentioned later. In other words, the hydrophilizing agent is preferably a hydrophilizing agent for a porous polymer film. The porous polymer film will be described later.

The invention also relates to a composition containing the above hydrophilizing agent and a polymer other than the hydrophilizing agent.

The composition preferably satisfies that the mass ratio of the polymer to the hydrophilizing agent (polymer/hydrophilizing agent) is 50/50 to 99.5/0.5. Too small an amount of the hydrophilizing agent may cause a large contact angle of the porous polymer film, while too large an amount of the hydrophilizing agent may cause a reduced strength thereof. The upper limit of the mass ratio is more preferably 95/5, still more preferably 90/10. The lower limit of the mass ratio is more preferably 70/30.

The composition is preferably one containing only the hydrophilizing agent and the fluorine-containing polymer as polymers or is preferably one containing the hydrophilizing agent, the fluorine-containing polymer, and a different resin other than these as polymers, and more preferably one containing only the hydrophilizing agent and the fluorine-containing polymer as polymers.

Examples of the resin other than the hydrophilizing agent or the fluorine-containing polymer include polyethylene resin, polypropylene resin, acrylic resin, polyacrylonitrile, acrylonitrile-butadiene-styrene (ABS) resin, polystyrene resin, acrylonitrile-styrene (AS) resin, vinyl chloride resin, polyethylene terephthalate, polyamide resin, polyacetal resin, polycarbonate resin, modified polyphenylene ether resin, polyphenylene sulfide resin, polyamide imide resin, polyether imide resin, polysulfone resin, polyether sulfone resin, and mixtures and copolymers thereof. Resin miscible with these resins may also be mixed.

The resin other than the hydrophilizing agent or the fluorine-containing polymer is preferably at least one selected from the group consisting of polyethylene resin, polypropylene resin, and acrylic resin.

The polyethylene resin is a resin formed from an ethylene homopolymer or an ethylene copolymer. The polyethylene resin may be formed from multiple ethylene copolymers. Examples of the ethylene copolymer include copolymers of ethylene and at least one selected from unsaturated linear hydrocarbons such as propylene, butene, and pentene.

The polypropylene resin is a resin formed from a propylene homopolymer or a propylene copolymer. The polypropylene resin may be formed from multiple propylene copolymers. Examples of the propylene copolymer include copolymers of propylene and at least one selected from unsaturated linear hydrocarbons such as ethylene, butene, and pentene.

The acrylic resin is a polymeric compound, mainly including polymers of any of acrylic acid, methacrylic acid, and derivatives thereof, such as acrylamide and acrylonitrile. Particularly preferred is acrylate resin or methacrylate resin.

The resin other than the hydrophilizing agent or the fluorine-containing polymer is most preferably acrylic resin.

The characteristics of the resulting porous polymer film such as membrane strength, water permeation performance, and the blocking performance can be adjusted by adjusting the type and the amount of the resin other than the hydrophilizing agent or the fluorine-containing polymer.

In order to achieve hydrophilization, to control phase separation, and to improve the mechanical strength, the composition may further contain additives such as polyvinylpyrrolidone, polymethyl methacrylate resin, polyethylene glycol, montmorillonite, SiO₂, TiO₂, CaCO₃, and polytetrafluoroethylene.

The composition may contain a solvent for the polymer. Examples of the solvent include middle-chain-length alkyl ketones, esters, glycol esters, and organic carbonates such as cyclohexanone, isophorone, γ-butyrolactone, methyl isoamyl ketone, dimethyl phthalate, diethyl phthalate, dibutyl phthalate, aliphatic polyhydric alcohols, propylene glycol methyl ether, propylene carbonate, diacetone alcohol, and glycerol triacetate, fluorosolvents such as HFC-365 and HCFC-225, and lower alkyl ketones, esters, and amides such as diphenyl carbonate, methyl benzoate, diethylene glycol ethyl acetate, benzophenone, N-methyl-2-pyrrolidone, dimethyl sulfoxide, dimethyl acetamide, dimethyl formamide, methyl ethyl ketone, acetone, tetrahydrofuran, tetramethylurea, and trimethyl phosphate.

The composition may contain a nonsolvent. Examples of the nonsolvent include water, aliphatic hydrocarbons, aromatic hydrocarbons, aromatic polyhydric alcohols, chlorinated hydrocarbons, and other chlorinated organic liquids such as hexane, pentane, benzene, toluene, carbon tetrachloride, o-dichlorobenzene, trichloroethylene, ethylene glycol, diethylene glycol, triethylene glycol, tetraethylene glycol, propylene glycol, butylene glycol, pentane diol, hexane diol, methanol, ethanol, propanol, and low-molecular-weight polyethylene glycol, and solvent mixtures thereof.

The nonsolvent means a solvent that does not dissolve or swell the resin until the melting point of the resin or the boiling point of the liquid.

The composition preferably contains 5 to 60 mass% in total of the hydrophilizing agent and the fluorine-containing polymer relative to the composition. The lower limit of the amount is more preferably 10 mass% and the upper limit thereof is more preferably 50 mass%.

The composition is useful as a composition for forming a porous polymer film. The use of the composition in production of a porous polymer film is also a suitable use thereof.

The invention also relates to a porous polymer film containing the above hydrophilizing agent and the polymer other than the hydrophilizing agent. The porous polymer film can be produced from the composition.

The porous polymer film preferably has a contact angle of 55° or smaller. The contact angle is more preferably 45° or smaller, still more preferably 40° or smaller. Since the porous polymer film contains the hydrophilizing agent and the polymer, it has a very small contact angle and, owing to this small contact angle, it is expected to have excellent hydrophilicity (fouling resistance, low-fouling performance). A porous film containing a vinylidene fluoride resin usually has a contact angle of about 70° and high hydrophobicity. This is presumably why such a porous film is easily fouled.

The porous polymer film preferably has a contact angle of 55° or smaller, more preferably 45° or smaller, still more preferably 40° or smaller, even after 168-hour contact with an aqueous sodium hypochlorite solution.

The contact angle is also referred to as a contact angle in water, and can be determined by a method of bringing a flat sheet membrane into contact with a bubble in water and measuring the contact angle of the bubble (the captive bubble method). The contact angle is measured using a static contact angle meter in such a manner that a porous polymer film is immersed in water for five hours and a 3-µL bubble is brought into contact with the surface in water at room temperature and normal pressure.

The porous polymer film preferably has a pore size of 2 nm to 2.0 µm, more preferably 5 nm to 0.5 µm. Too small a pore size may cause insufficient permeability of gas or liquid, while too large a pore size may cause poor blocking performance, or poor mechanical strength, possibly causing easy breakage.

The pore size is determined as follows: the surface of a porous polymer film is photographed using, for example, SEM at a magnification that allows clear observation of the pores, and the diameters of the pores are measured. For elliptical pores, the diameter of each pore is determined by (a × b) × 0.5, wherein "a" represents the length of the minor axis and "b" represents the length of the major axis. Also, the pore size can roughly be determined from the particle blocking rate. For example, a porous film that can block 95% or more of 50-nm polystyrene particles is considered to have a pore size of 50 nm or smaller.

For the porous polymer film capable of blocking 95% or more of 50-nm particles, for example, the coefficient of pure water permeability thereof is preferably 1.5 × 10⁻¹⁰ m³/m²/s/Pa or higher, more preferably 3.0 × 10⁻¹¹ m³/m²/s/Pa or higher. The upper limit of the coefficient of pure water permeability may be any value, and is preferably as high as possible within a range that allows the target blocking rate and strength to be maintained.

The coefficient of pure water permeability can be determined by filtering RO-treated water through a produced hollow fiber membrane or flat sheet membrane at a temperature of 25°C under, if necessary, a pressure of 0.01 MPa or higher with a pump or nitrogen. Specifically, the coefficient can be determined by the following formula: Coefficient of pure water permeability (m3/m2/s/Pa) = (water permeability)/(area of membrane)/(time for permeation)/(evaluation pressure).

The porous polymer film preferably has a 100-nm or 50-nm particle blocking rate of 90% or higher, more preferably 95% or higher.

The particle blocking rate can be determined as follows: polystyrene latex particles having a controlled particle size are diluted to about 100 ppm with a 0.1 mass% aqueous solution of Triton X-100, and the resulting dispersed solution is filtered as an evaluation liquid. The particle blocking rate can be determined by the following formula: Particle blocking rate (%) = ((absorbance of unfiltered evaluation liquid) - (absorbance of liquid permeated))/(absorbance of unfiltered evaluation liquid) × 100.

From the viewpoint of the mechanical strength, the porous polymer film preferably has a maximum breaking strength of 0.5 MPa or higher, more preferably 1.0 MPa or higher.

The maximum breaking strength can be determined by measuring the breaking strength of a sample piece at a chuck-to-chuck distance of 50 mm and a tensile rate of 200 mm/min, with the cross-sectional area before the tensile test being used as the unit measurement area. Alternatively, the maximum breaking strength can also be determined by measuring the breaking strength of a sample piece at a chuck-to-chuck distance of 25 mm and a tensile rate of 50 mm/min, with the cross-sectional area before the tensile test being used as the unit measurement area. The direction of stretching a test piece is the extrusion direction for hollow fiber membranes or the casting direction for flat sheet membranes.

From the viewpoint of the toughness, the porous polymer film preferably has a maximum elongation of 50% or higher, more preferably 100% or higher.

The maximum elongation can be determined as follows: the breaking strength of a test piece is measured at a chuck-to-chuck distance of 50 mm and a tensile rate of 200 mm/min, and the maximum percent elongation is determined as the maximum elongation on the basis of the value at a chuck-to-chuck distance of 50 mm. Alternatively, the maximum elongation can also be determined as follows: the breaking strength of a test piece is measured at a chuck-to-chuck distance of 25 mm and a tensile rate of 50 mm/min, and the maximum percent elongation is determined as the maximum elongation on the basis of the value at a chuck-to-chuck distance of 25 mm. The direction of stretching a test piece is the extrusion direction for hollow fiber membranes or the casting direction for flat sheet membranes.

The porous polymer film may have any structure. For example, the porous polymer film may have a three-dimensional network structure in which solids spread three-dimensionally in the form of network, or a spherical structure in which many spherical or substantially spherical solids are bonded directly or via linear solids. The porous polymer film may have both of these structures.

The porous polymer film is preferably in the form of a flat sheet membrane or a hollow fiber membrane.

The porous polymer film in the form of a flat sheet membrane may be a composite membrane including a polymer layer formed from the hydrophilizing agent and the polymer and a porous base. In the composite membrane, the surface of the porous base may be covered with the polymer layer formed from the hydrophilizing agent and the polymer, or the porous base and the polymer layer formed from the hydrophilizing agent and the polymer may be stacked with each other. Alternatively, the composite membrane may include the porous base, the polymer layer, and a resin layer formed from a resin other than the hydrophilizing agent or the polymer. The resin constituting the resin layer may be any of the aforementioned resins other than the hydrophilizing agent or the fluorine-containing polymer.

The porous base may be woven fabric, knitted fabric, or nonwoven fabric made of organic fiber such as polyester fiber, nylon fiber, polyurethane fiber, acrylic fiber, rayon fiber, cotton, or silk. Alternatively, the porous base may be woven fabric, knitted fabric, or nonwoven fabric made of inorganic fiber such as glass fiber or metal fiber. From the viewpoints of the elasticity and the cost, the porous base is preferably made of organic fiber.

The pore size on the surface of the porous base may freely be selected in accordance with the use thereof, and is preferably 5 nm to 100 µm, more preferably 8 nm to 10 µm.

The porous polymer film in the form of a flat sheet membrane preferably has a thickness of 10 µm to 2 mm, more preferably 30 to 500 µm. A composite membrane including the above porous base also preferably satisfies that the thickness of the porous polymer film falls within the above range.

From the viewpoint of the amount of water treated per unit area and unit volume, the porous polymer film is more preferably in the form of a hollow fiber membrane.

The porous polymer film in the form of a hollow fiber membrane preferably satisfies that the inner diameter of the hollow fiber membrane is 100 µm to 10 mm, more preferably 150 µm to 8 mm. The outer diameter of the hollow fiber membrane is preferably 120 µm to 15 mm, more preferably 200 µm to 12 mm.

The porous polymer film in the form of a hollow fiber membrane preferably has a thickness of 20 µm to 3 mm, more preferably 50 µm to 2 mm. The pore sizes on the inner and outer surfaces of the hollow fiber membrane can freely be selected in accordance with the use thereof, and they each preferably fall within the range of 2 nm to 2.0 µm, more preferably 5 nm to 0.5 µm.

The porous polymer film preferably satisfies that the proportion of the hydrophilizing agent relative to the sum of the masses of the hydrophilizing agent and the polymer on the surface of the film determined by X-ray photoelectron spectroscopy (XPS) is 10 mass% or more higher than the proportion of the hydrophilizing agent relative to the sum of the masses of the hydrophilizing agent and the polymer in the whole film. In other words, the hydrophilizing agent is preferably segregated on the film surface in the porous polymer film. This value is herein referred to as surface migration. The surface migration is more preferably 20% or higher, still more preferably 30% or higher. The upper limit thereof is not fixed.

The porous polymer film can be produced by any of various methods. Examples thereof include phase separation, melt extraction, vapor solidification, stretching, etching, sintering of a polymer sheet into a porous film, crushing of a bubble-containing polymer sheet into a porous film, and electrospinning.

The melt extraction is a method of forming a porous structure by melt-kneading inorganic particles and organic liquid matter with a mixture; extrusion-molding the kneaded matter through a die or molding it with a press at a temperature not lower than the melting points of the hydrophilizing agent and the polymer; cooling and solidifying the molded article; and then extracting the organic liquid matter and the inorganic particles.

The vapor solidification is a method of forcedly supplying saturated vapor or vapor containing mist of one or both of a nonsolvent and a poor solvent for at least one surface of a membrane-like article formed from a composition prepared by dissolving the hydrophilizing agent and the polymer in a good solvent, wherein the nonsolvent and the poor solvent are compatible with the good solvent and do not dissolve the hydrophilizing agent or the polymer.

The method of producing the porous polymer film of the invention is preferably phase separation so as to easily control the pore size. Examples of the phase separation include thermally induced phase separation (TIPS) and nonsolvent-induced phase separation (NIPS).

In the case of thermally induced phase separation, the porous polymer film of the invention can be produced by a method including dissolving the hydrophilizing agent and the polymer in a solvent that is a poor solvent or a good solvent at a relatively high temperature to provide a composition, and then cooling and solidifying the composition.

In the case of thermally induced phase separation, the sum of the amounts of the hydrophilizing agent and the polymer in the composition is preferably 10 to 60 mass%, more preferably 15 to 50 mass%, relative to the sum of the amounts of the hydrophilizing agent, the polymer, and the solvent.

The hydrophilizing agent and the polymer in a concentration within an appropriate range allow the composition to have a viscosity within an appropriate range. The composition having a viscosity beyond an appropriate range cannot be molded into a porous polymer film.

The poor solvent is a solvent that is not capable of dissolving 5 mass% or more of the hydrophilizing agent and the polymer at a temperature lower than 60°C but capable of dissolving 5 mass% or more thereof at a temperature of 60°C or higher and not higher than the melting points of the resins. In contrast to the poor solvent, a solvent that is capable of dissolving 5 mass% or more of the resins even at a temperature lower than 60°C is called a good solvent. A solvent that neither dissolves nor swells the resins until the temperature reaches the melting points of the resins or the boiling point of the liquid is called a nonsolvent.

Examples of the poor solvent include middle-chain-length alkyl ketones, esters, glycol esters, and organic carbonates such as cyclohexanone, isophorone, γ-butyrolactone, methyl isoamyl ketone, dimethyl phthalate, diethyl phthalate, dibutyl phthalate, aliphatic polyhydric alcohols, propylene glycol methyl ether, propylene carbonate, diacetone alcohol, and glycerol triacetate, and solvent mixtures thereof. Fluorosolvents such as HFC-365, diphenyl carbonate, methyl benzoate, diethylene glycol ethyl acetate, or benzophenone may also be used. Even a solvent mixture of a nonsolvent and a poor solvent will be a poor solvent as long as it satisfies the definition of the poor solvent.

In the case of thermally induced phase separation, a solvent for the composition is preferably, but not limited to, a poor solvent. As a result of examining the behavior of phase separation of a fluoropolymer, a good solvent may be used in some cases.

Examples of the good solvent for polyvinylidene fluoride include fluorosolvents such as HCFC-225, lower alkyl ketones, esters, and amides such as N-methyl-2-pyrrolidone, dimethyl sulfoxide, dimethyl acetamide, dimethyl formamide, methyl ethyl ketone, acetone, tetrahydrofuran, tetramethylurea, and trimethyl phosphate, and solvent mixtures thereof.

Examples of the nonsolvent include water, aliphatic hydrocarbons, aromatic hydrocarbons, aromatic polyhydric alcohols, and chlorinated hydrocarbons and other chlorinated organic liquids such as hexane, pentane, benzene, toluene, carbon tetrachloride, o-dichlorobenzene, trichloroethylene, ethylene glycol, diethylene glycol, triethylene glycol, tetraethylene glycol, propylene glycol, butylene glycol, pentane diol, hexane diol, methanol, ethanol, propanol, and low-molecular-weight polyethylene glycol, and solvent mixtures thereof.

In the case of thermally induced phase separation, the step of providing the composition is preferably a step of dissolving the hydrophilizing agent and the polymer in a solvent that is a poor solvent or a good solvent at high temperature. When dissolved at a relatively high temperature, the hydrophilizing agent and the polymer can be at a high concentration. This enables production of a porous polymer film having high mechanical strength.

The composition is preferably cooled and solidified by a method of ejecting the composition into a cooling bath through a die, for example. For the porous polymer film in the form of a flat sheet membrane, a method of casting and immersing the composition in a cooling bath is also a preferable method.

A cooling liquid to be used for the cooling bath has a temperature lower than the composition. Examples thereof include a liquid containing a solvent that is a poor solvent or a good solvent at a temperature of 0°C to 80°C and a concentration of 60 to 100 mass%. The cooling liquid may be a nonsolvent or a nonsolvent containing a poor solvent or a good solvent.

In the production of the porous polymer film, important features are the concentration of the composition, the constitution of the solvent that dissolves the hydrophilizing agent and the polymer, and the constitution of the cooling liquid constituting the cooling bath. The porous structure of the porous polymer film can be adjusted by adjusting these constitutions.

For example, one surface and the other surface of the porous polymer film may have different combinations of the constitution of the composition and the constitution of the cooling liquid. Thereby, the structure of the one surface of the porous polymer film may be made different from the structure of the other surface.

In producing the porous polymer film by nonsolvent-induced phase separation, for example, the porous polymer film is preferably produced by a method including dissolving the hydrophilizing agent and the polymer in a solvent to provide a composition, and ejecting the composition into a solidification bath containing a nonsolvent through a die.

Immersion of the composition in a solidification bath containing a nonsolvent can cause nonsolvent-induced phase separation with the concentration gradient between the solvent and nonsolvent in the composition and the solidification bath being used as a power for the phase separation. In such a method, solidification first progresses on the outer surface where phase separation occurs due to replacement between the solvent and the nonsolvent. Then, the phase-separating phenomenon proceeds toward the inside of the membrane. As a result, after the outer surface, an asymmetric film can also be produced in which the pore size continually changes toward the inside of the film.

In the case of nonsolvent-induced phase separation, the composition preferably contains the hydrophilizing agent, the polymer, and the solvent. The composition further containing a nonsolvent in addition to the hydrophilizing agent, the polymer, and the solvent is also a preferred embodiment.

The composition preferably contains 5 to 60 mass%, more preferably 10 to 50 mass%, of the hydrophilizing agent and the polymer relative to the sum of the amounts of the hydrophilizing agent, the polymer, the solvent, and the nonsolvent (if the composition is free from a nonsolvent, the sum of the amounts of the hydrophilizing agent, the polymer, and the solvent).

The composition preferably contains 0.1 to 10 mass%, more preferably 0.5 to 8 mass%, of the nonsolvent relative to the sum of the amounts of the hydrophilizing agent, the polymer, the solvent, and the nonsolvent.

The hydrophilizing agent and the polymer in a concentration within an appropriate range allow the composition to have a viscosity within an appropriate range. The composition having a viscosity beyond an appropriate range cannot be molded into a porous polymer film.

The composition may be at room temperature or may be heated. For example, the composition is preferably at 10°C to 75°C.

The solvent to be used in nonsolvent-induced phase separation may be any solvent exemplified for thermally induced phase separation. The solvent may be either a poor solvent or a good solvent, and is preferably a good solvent.

The nonsolvent may be any nonsolvent exemplified for thermally induced phase separation.

A solidification liquid to be used for the solidification bath for the solidification is preferably a liquid containing a nonsolvent. The liquid may further contain a poor solvent and a good solvent. The nonsolvent may be any nonsolvent exemplified for thermally induced phase separation. For example, water may suitably be used.

In production of the porous polymer film, the thermally induced phase separation and the nonsolvent-induced phase separation may be used in combination.

The nonsolvent-induced phase separation and the thermally induced phase separation can provide a porous membrane by ejecting a composition prepared by dissolving the hydrophilizing agent and the polymer in a solvent through a die and solidifying the composition. Examples of the die include slit dies, double orifice spinnerets, and triple orifice spinnerets.

In the case of producing a porous polymer film in the form of a hollow fiber membrane, the die to be used is preferably a double orifice spinneret or triple orifice spinneret for spinning a hollow fiber membrane.

In the case of a double orifice spinneret, the composition is emitted from the outer tube of the double orifice spinneret, while a hollow-forming fluid such as deionized water is emitted from the inner tube, and then the composition is solidified in a solidification bath or a cooling bath. Thereby, a hollow fiber membrane can be produced.

The hollow-forming fluid is usually in the form of gas or liquid. In thermally induced phase separation, a liquid containing a poor solvent or a good solvent in a concentration of 60 to 100%, which is the same as the cooling liquid, can preferably be used. Alternatively, a nonsolvent or a nonsolvent containing a poor solvent or a good solvent may also be used. In the nonsolvent-induced phase separation, the hollow-forming fluid is preferably the aforementioned nonsolvent. For example, water such as deionized water is preferred. The aforementioned nonsolvent may contain a poor solvent or a good solvent.

In thermally induced phase separation, the hollow-forming fluid is preferably the aforementioned solvent. For example, a poor solvent such as glycerol triacetate is preferred. In thermally induced phase separation, nitrogen gas may also be used.

A hollow fiber membrane with two structures may be formed using a hollow-forming fluid and of a cooling liquid or solidification liquid having different configurations. The hollow-forming fluid may be supplied in the cooled state. If the cooling force of the cooling bath alone is sufficient for solidifying the hollow fiber membrane, the hollow-forming fluid may be supplied without cooling.

A triple orifice spinneret is suitable for the cases of using two resin solutions. For example, two compositions are respectively emitted from the outer tube and the middle tube of the triple orifice spinneret, while a hollow-forming liquid is emitted from the inner tube, and then the compositions are solidified in a solidification bath or a cooling bath. Thereby, a hollow fiber membrane can be formed. Alternatively, a composition is emitted from the outer tube of the triple orifice spinneret, a resin solution containing a resin other than the hydrophilizing agent or the polymer is emitted from the middle tube, and a hollow-forming fluid is emitted from the inner tube, while the emitted materials are solidified in a solidification bath or a cooling bath. Thereby, a hollow fiber membrane can be formed.

The resin other than the hydrophilizing agent or the polymer may be any of those mentioned above. Preferred is the aforementioned resin other than the hydrophilizing agent or the fluorine-containing polymer, and more preferred is acrylic resin.

As mentioned above, production of a hollow fiber membrane by a method using a double orifice spinneret or a triple orifice spinneret is preferred in that the amount of a solidification liquid or a cooling liquid can be smaller than in production of a flat sheet membrane.

The porous polymer film in the form of a hollow fiber membrane may further include the polymer layer or the resin layer formed from a resin other than the hydrophilizing agent or the polymer on the outer surface or inner surface of the hollow fiber membrane formed by the above method.

The fluoropolymer layer or the resin layer can be formed by applying a composition or a resin solution to the outer surface or inner surface of the hollow fiber membrane. A preferred method of applying the composition or the resin solution to the outer surface of the hollow fiber membrane is immersing the hollow fiber membrane in the composition or the resin solution or dropping the composition or the resin solution onto the hollow fiber membrane. A preferred method of applying the composition or the resin solution to the inner surface of the hollow fiber membrane is injecting the composition or the resin solution into the hollow fiber membrane.

The amount of the composition or the resin solution to be applied can preferably be controlled by a method of controlling the amount itself of the composition or the resin solution to be applied, as well as a method of partially scraping off or blowing with an air knife the composition or the resin solution after immersing the porous membrane in the composition or the resin solution or applying the composition or the resin solution to the porous membrane, or a method of adjusting the concentration thereof upon application.

The porous polymer film in the form of a flat sheet membrane can be produced by casting the composition and immersing the composition in a cooling bath or a solidification bath. Alternatively, such a membrane can be produced by ejecting the composition into a cooling bath or a solidification bath through a slit die.

The porous polymer film in the form of a composite membrane including a porous base can be produced by immersing the porous base in the composition or by applying the composition to at least one face of the porous base, for example.

The aforementioned production method can provide a porous polymer film that has a small contact angle. Still, if the water permeation performance is insufficient, the porous film produced by the above production method may be further stretched so that the porous polymer film of the invention can be produced.

The pore size of the porous polymer film can be controlled by, for example, mixing an additive for controlling the pore size with the composition, and then allowing the additive to be eluted during or after formation of the porous structure of the hydrophilizing agent and the polymer. The additive may be made to remain in the porous membrane.

In each of the nonsolvent-induced phase separation and the thermally induced phase separation, the composition may contain an additive. Elution of the additive after formation of the porous structure enables control of the pore size of the porous polymer film. The additive may be made to remain in the porous film, if necessary.

Examples of the additive include organic compounds and inorganic compounds. The organic compounds are preferably those dissolved or uniformly dispersed in a solvent constituting the composition. They are also preferably those dissolved in a nonsolvent contained in the solidification liquid for nonsolvent-induced phase separation or a solvent contained in the cooling liquid for thermally induced phase separation.

Examples of the organic compounds include water-soluble polymers such as polyvinylpyrrolidone, polyethylene glycol, polyvinyl alcohol, polyethylene imine, polyacrylic acid, and dextran, surfactants such as Tween 40 (polyoxyethylene sorbitan monopalmitate), glycerin, and saccharides.

The inorganic compounds are preferably water-soluble compounds. Examples thereof include calcium chloride, lithium chloride, and barium sulfate.

The average pore size on the surface can also be controlled by controlling the phase separation rate in accordance with the type, concentration, and temperature of a nonsolvent in the solidification liquid without the additive. Addition of a nonsolvent to the composition is also effective to control the phase separation rate.

In order to achieve hydrophilization, to control phase separation, and to improve the mechanical strength, the composition may further contain additives such as polyvinylpyrrolidone, polymethyl methacrylate resin, montmorillonite, SiO₂, TiO₂, CaCO₃, and polytetrafluoroethylene.

In order to improve the water permeability, the porous polymer film may be treated with an alkali. The alkali herein means an aqueous NaOH solution, an aqueous KOH solution, ammonia water, an amine solution, or the like. They may contain any of alcohols, such as ethanol and methanol, and organic solvents. The alkali preferably contains an alcohol, but it is not limited thereto.

The hydrophilizing agent may be applied to a porous polymer film to form a coat giving hydrophilicity. The porous polymer film may be any of those mentioned above. The hydrophilizing agent may contain an organic solvent. The presence of an organic solvent enables easy application.

Examples of the organic solvent include aromatic hydrocarbons such as benzene, toluene, xylene, naphthalene, and solvent naphtha;
esters such as methyl acetate, ethyl acetate, propyl acetate, n-butyl acetate, isobutyl acetate, isopropyl acetate, isobutyl acetate, cellosolve acetate, propylene glycol methyl ether acetate, carbitol acetate, diethyl oxalate, ethyl pyruvate, ethyl-2-hydroxybutylate, ethyl acetacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate;
ketones such as acetone, methyl ethyl ketone, cyclohexanone, methyl isobutyl ketone, methyl ethyl ketone, cyclohexanone, methyl isobutyl ketone, 2-hexanone, cyclohexanone, methyl amino ketone, and 2-heptanone;
glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether;
alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol;
cyclic ethers such as tetrahydrofuran, tetrahydropyran, and dioxane;
amides such as N,N-dimethylformamide and N,N-dimethylacetamide;
ether alcohols such as methyl cellosolve, cellosolve, isopropyl cellosolve, butyl cellosolve, and diethylene glycol monomethyl ether;
1,1,2-trichloro-1,2,2-trifluoroethane, 1,2-dichloro-1,1,2,2-tetrafluoroethane, and dimethyl sulfoxide.

The examples also include mixtures of two or more of these solvents.

In addition, mention may be made of fluorine solvents such as CH₃CCl₂F (HCFC-141b), a CF₃CF₂CHCl₂/CClF₂CF₂CHClF mixture (HCFC-225), perfluorohexane, perfluoro(2-butyltetrahydrofuran), methoxy-nonafluorobutane, and 1,3-bistrifluoromethyl benzene, as well as
fluorine alcohols such as H(CF₂CF₂)ₙCH₂OH (where n is an integer of 1 to 3), F(CF₂)ₙCH₂OH (where n is an integer of 1 to 5), and CF₃CH(CF₃)OH;
benzotrifluoride, perfluorobenzene, perfluoro(tributylamine), and
ClCF₂CFClCF₂CFCl₂.

These fluorine solvents may be used alone or in combination. Alternatively, a solvent mixture of a non-fluorine solvent and one or more fluorine solvents may be used. Preferred are alcohols, ketones, butyl acetate, N,N-dimethylformamide, N,N-dimethylacetamide, and dimethyl sulfoxide. Most preferred are iso-propanol, methyl ethyl ketone, methyl isobutyl ketone, N,N-dimethylformamide, N,N-dimethylacetamide, and dimethyl sulfoxide. The hydrophilizing agent containing the organic solvent preferably contains 5 to 60 mass% of the fluoropolymer.
The hydrophilizing agent can be applied by a known method, such as spin coating, bar coating, casting, spray coating, or electrospinning. The hydrophilizing agent may further contain any of additives usually used for coatings, such as curing agents, curing accelerators, pigments, dispersants, thickeners, antiseptics, ultraviolet absorbers, antifoams, and leveling agents.

The porous polymer film is suitable for a microfiltration membrane or an ultrafiltration membrane to be used in production of drinking water and water treatment such as water-purifying treatment and wastewater treatment. Since the porous polymer film has a small contact angle, it is preferably a porous polymer film for water treatment.

The porous polymer film is also suitable for the use in the field of foods and the field of batteries.

In the field of foods, the porous polymer film can be intended for separation and removal of yeasts used for fermentation and condensation of liquid.

In the field of batteries, the porous polymer film can be used as a separator which allows an electrolyte solution to pass therethrough but does not allow products of cell reactions to pass therethrough.

As mentioned before, the invention also relates to a hydrophilizing agent containing a copolymer of a fluoromonomer and an amide bond-containing polymerizable vinyl compound, according to claim 1. The structure described for the fluoropolymer having the aforementioned specific contact angle and weight reduction rate can directly be applied as a preferred structure of the copolymer. Still, the hydrophilizing agent does not necessarily contain a copolymer having the aforementioned contact angle and weight reduction rate as long as it contains a copolymer of a fluoromonomer and an amide bond-containing polymerizable vinyl compound.

Through studies on the hydrophilizing agent, the inventors also successfully found out a novel copolymer that is a copolymer of at least one fluoromonomer selected from the group consisting of TFE and HFP and an amide bond-containing polymerizable vinyl compound, the copolymer containing a fluoromonomer unit in an amount of 55 to 15 mol% of all the monomer units and an amide bond-containing polymerizable vinyl compound unit in an amount of 45 to 85 mol% of all the monomer units (hereinafter, this copolymer is also referred to as a copolymer (A)). Since the copolymer (A) of the invention has the above structure, it has excellent heat resistance. Since the copolymer (A) of the invention has the above structure, it has both water insolubility and hydrophilicity, and thus can form a surface having a small contact angle by application, solvent casting, injection molding, extrusion molding, or compression molding, for example. The resulting surface has excellent fouling resistance.

The copolymer (A) containing more than 93 mol% of the amide bond-containing polymerizable vinyl compound unit has significantly poor water resistance.

The copolymer (A) more preferably satisfies that the fluoromonomer unit represents 55 to 15 mol% and the amide bond-containing polymerizable vinyl compound unit represents 45 to 85 mol%. Still more preferably, the fluoromonomer unit represents 45 to 20 mol% and the amide bond-containing polymerizable vinyl compound unit represents 55 to 80 mol%.

In particular, the copolymer (A) preferably satisfies that the mole ratio of the fluoromonomer unit to the amide bond-containing polymerizable vinyl compound unit (fluoromonomer unit/amide bond-containing polymerizable vinyl compound unit) falls within the range of 0.08 to 1.50, more preferably within the range of 0.25 to 1.25, still more preferably within the range of 0.25 to 0.82. Too low a mole ratio thereof may cause a failure in producing a porous polymer film having excellent durability, while too high a mole ratio thereof may cause a failure in producing a porous polymer film having excellent hydrophilicity. The copolymer having a mole ratio within an appropriate range can provide a hydrophilizing agent capable of producing a porous polymer film having excellent heat resistance, hydrophilicity, and durability.

Patent Literature 4 discloses a copolymer containing TFE or HFP, N-vinyl-2-pyrrolidone, and ω-hydroxybutyl vinyl ether. Non-Patent Literature 1 discloses copolymerization of N-vinylpyrrolidone and CTFE. Patent Literature 5 discloses a VDF-HFP-vinylpyrrolidone copolymer. Patent Literature 6 discloses a vinylidene fluoride/1-vinyl-2-pyrrolidinone ordered copolymer. Nevertheless, the above copolymer (A) has not been known.

The polymerizable vinyl compound contains an amide bond, and preferably further contains a polymerizable vinyl group in addition to the amide bond. The amide bond means a bond between a carbonyl group and a nitrogen atom.

Examples of the polymerizable vinyl group include a vinyl group, an allyl group, a vinyl ether group, a vinyl ester group, and an acryl group.

Examples of the amide bond-containing polymerizable vinyl compound include N-vinyllactam compounds such as N-vinyl-p-propiolactam, N-vinyl-2-pyrrolidone, N-vinyl-γ-valerolactam, N-vinyl-2-piperidone, and N-vinyl-heptolactam; noncyclic N-vinylamide compounds such as N-vinylformamide and N-methyl-N-vinylacetamide; noncyclic N-allyl amide compounds such as N-allyl-N-methylformamide and allylurea; N-allyllactam compounds such as 1-(2-propenyl)-2-pyrrolidone; and acrylamide compounds such as (meth)acrylamide, N,N-dimethylacrylamide, and N-isopropylacrylamide.

The amide bond-containing polymerizable vinyl compound may also be a compound represented by the following formula: 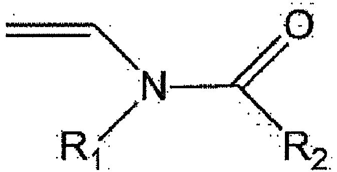 (wherein R₁ and R₂ are each independently H or a C1-C10 alkyl group) or a compound represented by the following formula: 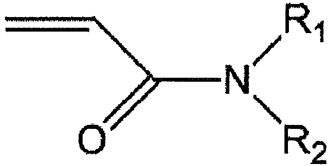 (wherein R₁ and R₂ are each independently H or a C1-C10 alkyl group).

Preferred is an N-vinyllactam compound or a noncyclic N-vinylamide compound, more preferred is at least one selected from the group consisting of N-vinyl-β-propiolactam, N-vinyl-2-pyrrolidone, N-vinyl-γ-valerolactam, N-vinyl-2-piperidone, and N-vinyl-heptolactam, still more preferred is at least one selected from the group consisting of N-vinyl-2-pyrrolidone and N-vinyl-2-piperidone, particularly preferred is N-vinyl-2-pyrrolidone.

The novel copolymer (A) may contain a different monomer unit other than the fluoromonomer unit or the amide bond-containing polymerizable vinyl compound unit. Examples of the different monomer unit include vinyl ester monomer units, vinyl ether monomer units, (meth)acrylic monomer units having polyethylene glycol in a side chain, vinyl monomer units having polyethylene glycol in a side chain, (meth)acrylic monomer units having a long-chain hydrocarbon group, vinyl monomer units having a long-chain hydrocarbon group, an ethylene unit, α-alkyl olefin units such as propylene, a vinyl chloride unit, a vinylidene chloride unit, and 1,2-bisubstituted olefins such as norbornenes. The amount in total of the different monomer unit(s) may be 0 to 40 mol%, may be 0 to 30 mol%, may be 0 to 15 mol%, and may be 0 to 5 mol%.

The different monomer unit other than the fluoromonomer unit or the amide bond-containing polymerizable vinyl compound unit in the copolymer (A) is not preferably one having a cross-linkable functional group. This is because the polarity of a cross-linkable functional group impairs the heat resistance and durability.

Examples of the cross-linkable functional group include active hydrogen-containing groups such as a hydroxy group, a carboxylate group, an amino group, and an acid amide group, an epoxy group, a halogen-containing group, and a double bond.

The fluoromonomer/amide bond-containing polymerizable vinyl compound copolymer (A) preferably substantially consists of a fluoromonomer unit and an amide bond-containing polymerizable vinyl compound unit.

The novel copolymer (A) can be produced by radical polymerization. The type of a production process, the presence or absence of a medium and the type thereof, the uniformity in the polymerization reaction system, and other factors are not limited. For example, the novel copolymer (A) can be produced by solution polymerization, emulsion polymerization, soap-free polymerization, suspension polymerization, precipitation polymerization, dispersion polymerization, or bulk polymerization, for example.

The novel copolymer (A) can be used as a hydrophilizing agent, and can suitably be used as a sealant, a coating agent, a dispersant, a binder, an antistatic, an adhesive, a thickener, a humectant, an antifouling agent, a porous film, or the like.

The novel copolymer (A) has a low refractive index, and thus can suitably be used as an optical material. The refractive index (nD) for the use as an optical material is measured with a sodium D line as a light source using an Abbe refractometer (Atago Co., Ltd.) at 25°C.

The novel copolymer (A) with a low refractive index is favorably used as an optical material because such a low refractive index theoretically reduces the Rayleigh scattering loss. Further, the reflectivity is also decreased because this low refractive index reduces the Fresnel reflection. Thus, the novel copolymer (A) is favorably used as a display-related device. In addition, use of such a low refractive index material for the optical system of an image sensor such as a CCD or a CMOS is preferred because it improves the efficiency of collecting the light. Such a low refractive index material is also generally advantageous in terms of optical design in that the refractive index is less dependent on the wavelength.

### EXAMPLES

The invention will be described in detail below referring to, but not limited to, the following examples.

The parameters in the examples were determined as follows.

### (Mole ratio of monomers)

The mole ratio was determined by elemental analysis.

The molecular weights were determined by gel permeation chromatography (GPC).

### (Evaluation of fouling resistance)

The fouling resistance of a flat sheet membrane was evaluated using a water permeability measurement device. An aqueous solution (50 ppm) of humic acid (Wako Pure Chemical Industries, Ltd.) was used as a feed solution. A sheet of flat sheet membrane was mounted on the water permeability measurement device. The permeation pressure was adjusted to 0.5 atm. In order to thicken and densify the film simultaneously, pure water was fed at a temperature of 25°C and a flow rate of 20 mL/min for 30 minutes or longer. Based on the permeation rate at this time, the coefficient of pure water permeability was determined. Thereafter, the feed solution was switched to the aqueous humic acid solution and this aqueous solution was fed at a temperature of 25°C and a flow rate of 20 mL/min. The water permeability was compared with the initial value 30 minutes after and one hour after the start of feeding the aqueous solution. The parameter was evaluated by the following criteria.
Excellent: The water permeability one hour later was kept at 50% or higher relative to the initial value.
Good: The water permeability 30 minutes later was kept at 50% or higher relative to the initial value.
Poor: The water permeability 30 minutes later was lower than 50% relative to the initial value.

### (Production Example 1)

### (Preparation of copolymer (1) of tetrafluoroethylene and N-vinylpyrrolidone)

A pressure-resistant reaction container after leakage testing was sufficiently purged with nitrogen, and then charged with deoxidized acetone (752 g) and N-vinylpyrrolidone (27.2 g). Tetrafluoroethylene (100 g) was then added thereto under pressure, and the components were mixed under stirring such that the inner temperature of the mixture was 60°C. Then, t-butyl peroxypivalate was added so that the reaction was allowed to start. Thirty five minutes after the start of the reaction, the remaining tetrafluoroethylene was removed and hydroquinone (1.1 g) was added. The reaction mixture was concentrated and the concentrated solution was added to hexane so that the solid was reprecipitated. The resulting solid precipitate was washed with water three times. The polymer washed with water was dissolved in methanol and put into water so that the solid was reprecipitated. The resulting solid precipitate was dried, and thereby 15 g of a target copolymer (1) was obtained. The resulting copolymer (1) was found to be a copolymer having a weight average molecular weight of 6.4 × 10⁴ and a molecular weight distribution of 1.9 and containing 50 mol% of a tetrafluoroethylene unit and 50 mol% of an N-vinylpyrrolidone unit. The mole ratio (tetrafluoroethylene unit/N-vinylpyrrolidone unit) was 1 and the fluorine content was 36 mass%.

### (Production Example 2)

### (Preparation of copolymer (2) of tetrafluoroethylene and N-vinylpyrrolidone)

A pressure-resistant reaction container after leakage testing was sufficiently purged with nitrogen, and then charged with deoxidized methyl isobutyl ketone (90.3 g) and N-vinylpyrrolidone (9.80 g). Tetrafluoroethylene was then added thereto under pressure, and the components were mixed under stirring with a stirrer such that the inner temperature of the mixture was 60°C. Then, azobisisobutyronitrile (0.197 g) was added so that the reaction was allowed to start. One hour after the start of the reaction, the remaining tetrafluoroethylene was removed and hydroquinone (0.132 g) was added. The reaction mixture was added to hexane so that the solid was reprecipitated. The supernatant was decanted. Water was added for washing, and the precipitated polymer was collected by suction filtration. The resulting polymer was washed with water twice and with ethyl acetate three times. The resulting solid was dried, and thereby 3.3 g of a target copolymer (2) was obtained. The resulting copolymer (2) was a copolymer having a weight average molecular weight of 6.5 × 10⁴ and a molecular weight distribution of 2.0 and containing 34 mol% of a tetrafluoroethylene unit and 66 mol% of an N-vinylpyrrolidone unit. The mole ratio (tetrafluoroethylene unit/N-vinylpyrrolidone unit) was 0.52 and the fluorine content was 24 mass%.

### (Production Example 3)

### (Preparation of (MMA-PEGMA) copolymer (3))

A 300-ml four-neck recovery flask was charged with 100 g of methyl ethyl ketone (MEK), 200 mmol (20 g) of CH₂=C(CH₃)-CH₃ (hereinafter, abbreviated as "MMA"), and 58 mmol (27.5 g) of CH₂=C(CH₃)-COO(CH₂CH₂O)ₘCH₃ (hereinafter, abbreviated as "PEGMA", M:475, m=9), and nitrogen was blown into the solution for 20 minutes so that the solution was bubbled. Then, 0.60 mmol (0.1 g) of AIBN was added to the reaction solution and the temperature of a water bath was increased such that the internal temperature reached 60°C. A three-one motor was rotated at 250 rpm. Eight hours later, the reaction was finished and the system was naturally cooled. The reaction solution was concentrated with an evaporator and the solid was reprecipitated in hexane. The polymer was collected and vacuum dried, and thereby a target polymer (MMA-PEGMA) was obtained. The resulting copolymer (3) was a copolymer having a weight average molecular weight of 15.0 × 10⁴ and a molecular weight distribution of 2.5 and containing 72 mol% of a MMA unit and 28 mol% of a PEGMA unit. The fluorine content was 0 mass%.

### (Production Example 4)

### (Preparation of copolymer (4) of tetrafluoroethylene and N-vinylpyrrolidone)

A pressure-resistant reaction container after leakage testing was sufficiently purged with nitrogen, and then charged with deoxidized methyl isobutyl ketone (85.0 g) and N-vinylpyrrolidone (3.90 g). Tetrafluoroethylene was then added thereto under pressure, and the components were mixed under stirring with a stirrer such that the inner temperature of the mixture was 60°C. Then, azobisisobutyronitrile (0.201 g) was added so that the reaction was allowed to start. One hour after the start of the reaction, the remaining tetrafluoroethylene was removed and hydroquinone (0.133 g) was added. The reaction mixture was added to hexane so that the solid was reprecipitated. The supernatant was decanted. Water was added for washing, and the precipitated polymer was collected by suction filtration. The resulting polymer was washed with water twice and with ethyl acetate three times. The resulting solid was dried, and thereby 4.1 g of a target copolymer (4) was obtained. The resulting copolymer (4) was a copolymer having a weight average molecular weight of 7.8 × 10⁴ and a molecular weight distribution of 2.5 and containing 80 mol% of a tetrafluoroethylene unit and 20 mol% of an N-vinylpyrrolidone unit. The mole ratio (tetrafluoroethylene unit/N-vinylpyrrolidone unit) was 4 and the fluorine content was 59.5 mass%.

### (Production Example 5)

### (Preparation of copolymer (5) of tetrafluoroethylene and N-vinylpyrrolidone)

A pressure-resistant reaction container after leakage testing was sufficiently purged with nitrogen, and then charged with deoxidized methyl isobutyl ketone (MIBK)(90.3 g), N-vinylpyrrolidone (49.0 g), and azobisisobutyronitrile (0.197 g). Tetrafluoroethylene was then added thereto such that the pressure inside the container reached 0.02 MPaG, and the components were mixed under stirring such that the inner temperature of the mixture was 60°C. Then, the reaction was allowed to start. One hour after the start of the reaction, the remaining tetrafluoroethylene was removed and hydroquinone (0.132 g) was added. The reaction mixture was added to a solvent mixture of hexane and MIBK in a volume ratio of 1:1 so that the solid was reprecipitated. The supernatant was removed, and the solid was again dissolved in methanol. The solution was added to a solvent mixture of hexane and methyl ethyl ketone in a volume ratio of 1:1 so that the solid was reprecipitated. The resulting solid precipitate was filtered and purified, and then dried with an air dryer at 45°C for 18 hours. Thereby, 5.4 g of a target copolymer (5) was obtained. The resulting copolymer (5) was a copolymer having a weight average molecular weight of 7.1 × 10⁴ and a molecular weight distribution of 2.7 and containing 5.4 mol% of a tetrafluoroethylene unit and 94.6 mol% of an N-vinylpyrrolidone unit. The mole ratio (tetrafluoroethylene unit/N-vinylpyrrolidone unit) was 0.06 and the fluorine content was 4.1 mass%.

### (Experimental Example 1)

A polymer solution was prepared containing 1 mass% of the copolymer (1) obtained in Production Example 1 and 99 mass% of N,N-dimethylacetamide. This polymer solution was spin-coated on a silicon wafer at 2000 rpm and heat-dried at 110°C. Thereby, a smooth surface of the polymer was obtained. The resulting silicon wafer was immersed in deionized water for five hours and a 3-µl bubble was brought into contact with the polymer surface in water. The contact angle measured was 46.7°, which indicates the polymer had sufficiently high hydrophilicity.

The glass transition temperature of the copolymer (1) measured using a DSC was 109°C.

Then, 2.3 g of a polymer solution was prepared containing 13 mass% of the copolymer (1) and 87 mass% of N,N-dimethylformamide. This solution was spread on a laboratory dish having a diameter of about 58 mm and dried. Thereby, a polymer film was obtained. This film was immersed in a 5000 ppm aqueous sodium hypochlorite solution whose pH was adjusted to 13 with sodium hydroxide for 168 hours. After the immersion, the polymer film was washed with water and dried. The weight change before and after the immersion was calculated. As a result, the weight reduction was 1.4 mass%, which indicates the polymer had high stability.

### (Reference Example 1)

A polymer solution was prepared containing 18 mass% of polyvinylidene fluoride and 82.0 mass% of N,N-dimethylacetamide. This polymer solution was applied to a glass plate using an applicator (203 µm). Immediately thereafter, the workpiece was immersed in a 25°C water solidification bath for 10 minutes. Thereby, a flat porous film was obtained. The resulting porous film had a contact angle of 77.0°.

### (Experimental Example 2)

A polymer solution was prepared containing 1.8 mass% of the copolymer (1) obtained in Production Example 1, 16.2 mass% of polyvinylidene fluoride, and 82 mass% of N,N-dimethylacetamide. This polymer solution was applied to a glass plate using an applicator (203 µm). Immediately thereafter, the workpiece was immersed in a 25°C water solidification bath for 10 minutes. Thereby, a porous flat sheet film was obtained. The resulting porous film was immersed in a 5000 ppm aqueous sodium hypochlorite solution whose pH was adjusted to 11 with sodium hydroxide for 168 hours, and the contact angle of the surface was measured. The contact angle before the immersion was 43.5°, which indicates the polymer served as a hydrophilizing agent. The contact angle after the 168-hour immersion was 47.3°, which indicates the polymer had high stability as a hydrophilizing agent.

### (Experimental Example 3)

Using the copolymer (2) obtained in Production Example 2, a surface of the polymer was formed on a silicon wafer by spin-coating in the same manner as in Experimental Example 1. The contact angle thereof was 33.8°.

The glass transition temperature of the copolymer (2) measured using a DSC was 152°C.

A polymer solution was prepared containing 13 mass% of the copolymer (2) and 87 mass% of N,N-dimethylformamide. The polymer film was immersed in a 5000 ppm aqueous sodium hypochlorite solution with a pH of 13 and the weight change was measured in the same manner as in Experimental Example 1. The weight reduction after the 168-hour immersion was 6.0 mass%, which indicates the polymer had high stability.

### (Experimental Example 4)

A polymer solution was prepared containing 4.5 mass% of the copolymer (2) obtained in Production Example 2, 13.5 mass% of polyvinylidene fluoride, and 82 mass% of N,N-dimethylacetamide. A porous film was obtained in the same manner as in Experimental Example 2 and immersed in a 5000 ppm aqueous sodium hypochlorite solution with a pH of 11. The contact angle before the immersion was 30.1°, which indicates the polymer served as a hydrophilizing agent. The contact angle after the 168-hour immersion was 26.4°, which indicates the polymer had high stability.

### (Comparative Example 1)

Using the copolymer (3) (MMA-PEGMA) obtained in Production Example 3, the contact angle measured in the same manner as in Experimental Example 1 was 45.2°.

A polymer solution containing 13 mass% of the copolymer (3) and 87 mass% of N,N-dimethylformamide was dry-solidified to form a polymer film. The polymer film was immersed in a 5000 ppm aqueous sodium hypochlorite solution in the same manner as in Experimental Example 1 except that the pH was adjusted to 11. The weight change was measured and the weight reduction was found to be 13.3 mass%.

### (Comparative Example 2)

A polymer solution was prepared containing 4.5 mass% of the copolymer (3) obtained in Production Example 3, 13.5 mass% of polyvinylidene fluoride, and 82.0 mass% of N,N-dimethylacetamide. A porous film was obtained in the same manner as in Experimental Example 2 and immersed in a 5000 ppm aqueous sodium hypochlorite solution with a pH of 11. The contact angle before the immersion was 42.7° and the contact angle after the 168-hour immersion was 57.8°, resulting in poor durability. This is presumably because the durability of the copolymer (3) itself was poor as indicated in Comparative Example 1.

### (Comparative Example 3)

A polymer film was immersed in a 5000 ppm sodium hypochlorite with a pH of 13 in the same manner as in Experimental Example 1 except that the polymer film was formed by dissolving polyvinylpyrrolidone (purchased from Wako Pure Chemical Industries, Ltd. as a reagent, Mw = 35,000) in methanol. The weight reduction after the 168-hour immersion was 100 mass%, which indicates the whole polymer was dissolved.

### (Comparative Example 4)

Using the copolymer (4) obtained in Production Example 4, a surface of the polymer was formed on a silicon wafer by spin-coating in the same manner as in Experimental Example 1. The contact angle thereof was 60.2°, which indicates the polymer had insufficient hydrophilicity.

The glass transition temperature of the copolymer (4) measured using a DSC was 71°C.

A polymer solution was prepared containing 13 mass% of the copolymer (4) and 87 mass% of N,N-dimethylformamide. The polymer film was immersed in a 5000 ppm aqueous sodium hypochlorite solution with a pH of 13 and the weight change was measured in the same manner as in Experimental Example 1. The weight reduction caused by the 168-hour immersion was 0.3 mass%.

### (Comparative Example 5)

Using a poly(tetrafluoroethylene/vinyl alcohol) copolymer in a mole ratio (tetrafluoroethylene)/(vinyl alcohol) of 33/67, the hydrophilicity and the durability were evaluated. This copolymer had a molecular weight of 130000, a fluorine content of 40 mass%, a mole ratio of 0.49, a contact angle of 40.5°, and a weight reduction rate of 9.2%. A polymer solution was prepared containing 1.8 mass% of this copolymer, 16.2 mass% of polyvinylidene fluoride, and 82.0 mass% of N,N-dimethylacetamide. A porous film was formed and immersed in a 5000 ppm aqueous sodium hypochlorite solution with a pH of 11 in the same manner as in Experimental Example 2. The contact angle before the immersion was 43.5° and the contact angle after the 168-hour immersion was 58.9°, which indicates the polymer had poor durability.

### (Comparative Example 6)

A polymer film was immersed in 5000 ppm sodium hypochlorite with a pH of 13 in the same manner as in Experimental Example 1 except that the polymer film was formed by dissolving the copolymer (5) obtained in Production Example 5 in N,N-dimethylacetamide. The weight reduction after the 168-hour immersion was 100 mass%, which indicates the whole polymer was dissolved.

### (Experimental Example 5)

A polymer solution was prepared containing 3 mass% of the copolymer (1) obtained in Production Example 1, 20 mass% of polyvinylidene fluoride, and 77 mass% of N,N-dimethylacetamide.

This polymer solution was applied to a glass plate using an applicator (203 µm). Immediately thereafter, the workpiece was immersed in a 25°C water solidification bath for 10 minutes. Thereby, a porous flat sheet film was obtained. The resulting porous film was evaluated. The coefficient of pure water permeability was 6.4 × 10⁻¹⁰ m³/m²/s/Pa and the fouling resistance was evaluated as good.

### (Experimental Example 6)

A porous flat sheet film was produced in the same manner as in Experimental Example 5 except that the amount of the copolymer (2) obtained in Production Example 2 was 3 mass%. The resulting porous film was evaluated. The coefficient of pure water permeability was 6.9 × 10⁻¹⁰ m³/m²/s/Pa and the fouling resistance was evaluated as excellent.

### (Reference Example 2)

A polymer solution was prepared containing 16 mass% of PVdF, 5 mass% of polyethylene glycol 400, 2 mass% of water, and 77 mass% of N,N-dimethylacetamide.

Using this polymer solution, a porous flat sheet film was obtained in the same manner as in Experimental Example 5, and washed in water at 90°C so as to remove the polyethylene glycol 400. The resulting porous film was evaluated. The coefficient of pure water permeability was 5.1 × 10⁻¹⁰ m³/m²/s/Pa and the fouling resistance was evaluated as poor.

### (Comparative Example 7)

A porous flat sheet film was produced in the same manner as in Experimental Example 5 except that the amount of the copolymer (4) obtained in Production Example 4 was 3 mass%. The resulting porous film was evaluated. The coefficient of pure water permeability was 5.8 × 10⁻¹⁰ m³/m²/s/Pa and the fouling resistance was evaluated as poor.

### (Production Example 6)

### (Preparation of copolymer (6) of chlorotrifluoroethylene and N-vinylpyrrolidone)

A pressure-resistant reaction container after leakage testing was sufficiently purged with nitrogen, and then charged with deoxidized methyl isobutyl ketone (90.3 g) and N-vinylpyrrolidone (3.27 g). Chlorotrifluoroethylene (128 g) was then added thereto under pressure, and the components were mixed under stirring such that the inner temperature of the mixture was 60°C. Then, azobisisobutyronitrile (0.197 g) was added so that the reaction was allowed to start. Sixteen hours after the start of the reaction, the reaction was further continued for one hour at 80°C. The remaining chlorotrifluoroethylene was removed and hydroquinone (0.132 g) was added. The reaction mixture was concentrated and the concentrated solution was added to hexane so that the solid was reprecipitated. The resulting solid precipitate was added to the same amounts of diethyl ether and hexane and stirred. The supernatant was removed, and then air-dried using a draft overnight. The resulting product was washed with water three times, decanted, and air-dried in the draft. The resulting product was further washed with hexane three times, decanted, and dried. Thereby, 2.69 g of a target copolymer (6) was obtained. The resulting copolymer (6) was found to be a copolymer having a weight average molecular weight of 4.7 × 10⁴ and a molecular weight distribution of 4.3 and containing 64 mol% of a chlorotrifluoroethylene unit and 36 mol% of an N-vinylpyrrolidone unit. The mole ratio (chlorotrifluoroethylene unit/N-vinylpyrrolidone unit) was 1.78.

### (Production Example 7)

### (Preparation of copolymer (7) of hexafluoropropylene and N-vinylpyrrolidone)

A pressure-resistant reaction container after leakage testing was sufficiently purged with nitrogen, and then charged with deoxidized acetone (891.6 g) and N-vinylpyrrolidone (135.8 g). Hexafluoropropylene (150 g) was then added thereto under pressure, and the components were mixed under stirring such that the inner temperature of the mixture was 60°C. Then, t-butyl peroxypivalate was added so that the reaction was allowed to start. Four and a half hours after the start of the reaction, the remaining hexafluoropropylene was removed. The reaction mixture was added to a solution mixture of hexane/ethyl acetate = 8:2 (vol%) so that the solid was reprecipitated. The resulting solid precipitate was separately washed with a solution mixture of hexane/ethyl acetate. The resulting polymer was dried, and thereby 249 g of a target copolymer (7) was obtained. The resulting copolymer (7) was found to be a copolymer having a weight average molecular weight of 1.2 × 10⁴ and a molecular weight distribution of 1.7 and containing 28 mol% of a hexafluoropropylene unit and 72 mol% of an N-vinylpyrrolidone unit. The mole ratio (hexafluoropropylene unit/N-vinylpyrrolidone unit) was 0.39 and the fluorine content was 26 mass%.

### (Experimental Example 7)

The temperature of the copolymer (2) was increased up to 600°C at 10°C/min in the air atmosphere using a thermogravimetric analyzer. Tangential lines were drawn from the point where the weight is constant and from the point where the weight is reduced, and the temperature at the intersection thereof was defined as the thermal decomposition temperature. The thermal decomposition temperature of the copolymer (2) was 368°C.

### (Comparative Example 8)

The temperature of the copolymer (6) was increased up to 600°C at 10°C/min in the air atmosphere using a thermogravimetric analyzer in the same manner as in Experimental Example 7. Tangential lines were drawn from the point where the weight is constant and from the point where the weight is reduced, and the temperature at the intersection thereof was defined as the thermal decomposition temperature. The thermal decomposition temperature of the copolymer (6) was 303°C.

### (Experimental Example 8)

The temperature of the copolymer (7) was increased up to 600°C at 10°C/min in the air atmosphere using a thermogravimetric analyzer in the same manner as in Experimental Example 7. Tangential lines were drawn from the point where the weight is constant and from the point where the weight is reduced, and the temperature at the intersection thereof was defined as the thermal decomposition temperature. The thermal decomposition temperature of the copolymer (7) was 375°C.

### (Experimental Example 9)

Using the copolymer (6) obtained in Production Example 6, a surface of the polymer was formed on a silicon wafer by spin-coating in the same manner as in Experimental Example 1. The contact angle thereof was 46.8°.

### (Experimental Example 10)

Using the copolymer (7) obtained in Production Example 7, a surface of the polymer was formed on a silicon wafer by spin-coating in the same manner as in Experimental Example 1. The contact angle thereof was 38.2°.

## Claims

1. A copolymer comprising:
at least one fluoromonomer selected from the group consisting of tetrafluoroethylene and hexafluoropropylene; and
an amide bond-containing polymerizable vinyl compound,
the copolymer containing a fluoromonomer unit in an amount of 55 to 15 mol% of all the monomer units and an amide bond-containing polymerizable vinyl compound unit in an amount of 45 to 85 mol% of all the monomer units.

2. The copolymer according to claim 1,
wherein the mole ratio of the fluoromonomer unit to the amide bond-containing polymerizable vinyl compound unit (fluoromonomer unit/amide bond-containing polymerizable vinyl compound unit) is within the range of 0.08 to 1.50.

3. The copolymer according to claim 1 or 2,
wherein the amide bond-containing polymerizable vinyl compound is an N-vinyllactam compound.

4. The copolymer according to claim 1, 2 or 3,
wherein the amide bond-containing polymerizable vinyl compound is a compound represented by the following formula: 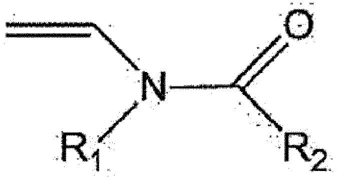
wherein R¹ and R² are each independently H or a C1-C10 alkyl group.

5. A composition comprising:
a hydrophilizing agent comprising a fluoropolymer having a contact angle in water of 50° or smaller as measured in accordance with the method indicated in the description; and
a polymer other than the hydrophilizing agent;
wherein the fluoropolymer is a copolymer according to claim 1, 2, 3 or 4.

6. The composition according to claim 5,
wherein the fluoropolymer has a softening point of 70°C to 200°C.

7. The composition according to claim 5 or 6,
wherein the fluoropolymer has a fluorine content of 5 mass% or more.

8. The composition according to claim 5, 6, or 7, which is a composition for a porous polymer film.

9. The composition according to claim 5,
wherein the polymer is polyvinylidene fluoride or a copolymer containing a vinylidene fluoride unit.

10. A porous polymer film comprising the composition according to claim 5, 6, 7, 8 or 9.

11. The porous polymer film according to claim 10, which has a contact angle in water of 55° or smaller as measured in accordance with the method indicated in the description.

12. A hydrophilizing agent comprising a copolymer according to claim 1, 2, 3 or 4.

## Patentansprüche

1. Copolymer, umfassend:
mindestens ein Fluormonomer, ausgewählt aus der Gruppe, bestehend aus Tetrafluorethylen und Hexafluorpropylen; und
eine polymerisierbare Vinylverbindung, die eine Amidbindung enthält,
wobei das Copolymer eine Fluormonomereinheit in einer Menge von 55 bis 15 mol% aller Monomereinheiten und eine Einheit einer polymerisierbaren Vinylverbindung, die eine Amidbindung enthält, in einer Menge von 45 bis 85 mol% aller Monomereinheiten enthält.

2. Copolymer gemäß Anspruch 1,
worin das Molverhältnis der Fluormonomereinheit zur Einheit einer polymerisierbaren Vinylverbindung, die eine Amidbindung enthält, (Fluormonomereinheit/ Einheit einer polymerisierbaren Vinylverbindung, die eine Amidbindung enthält) innerhalb des Bereiches von 0,08 bis 1,50 liegt.

3. Copolymer gemäß Anspruch 1 oder 2,
worin die Einheit einer polymerisierbaren Vinylverbindung, die eine Amidbindung enthält, eine N-Vinyllactamverbindung ist.

4. Copolymer gemäß Anspruch 1, 2 oder 3,
worin die Einheit einer polymerisierbaren Vinylverbindung, die eine Amidbindung enthält, eine durch die folgende Formel dargestellte Verbindung ist: 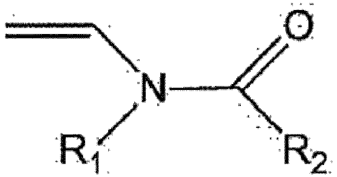
worin R¹ und R² jeweils unabhängig H oder eine C1-C10-Alkylgruppe sind.

5. Zusammensetzung, umfassend:
ein Hydrophilierungsmittel, umfassend ein Fluorpolymer mit einem Wasserkontaktwinkel von 50° oder kleiner, der gemäß der in der Beschreibung angegebenen Methode gemessen wird; und
ein anderes Polymer als das Hydrophilierungsmittel;
worin das Fluorpolymer ein Copolymer gemäß Anspruch 1, 2, 3 oder 4 ist.

6. Zusammensetzung gemäß Anspruch 5,
worin das Fluorpolymer einen Erweichungspunkt von 70°C bis 200°C aufweist.

7. Zusammensetzung gemäß Anspruch 5 oder 6,
worin das Fluorpolymer einen Fluorgehalt von 5 Massen-% oder mehr aufweist.

8. Zusammensetzung gemäß Anspruch 5, 6 oder 7, die eine Zusammensetzung für einen porösen Polymerfilm ist.

9. Zusammensetzung gemäß Anspruch 5,
worin das Polymer Polyvinylidenfluorid oder ein Copolymer ist, das eine Vinylidenfluorideinheit enthält.

10. Poröser Polymerfilm, umfassend die Zusammensetzung gemäß Anspruch 5, 6, 7, 8 oder 9.

11. Poröser Polymerfilm gemäß Anspruch 10, der einen Wasserkontaktwinkel von 55° oder kleiner aufweist, der gemäß der in der Beschreibung angegebenen Methode gemessen wird.

12. Hydrophilierungsmittel, umfassend ein Copolymer gemäß Anspruch 1, 2, 3 oder 4.

## Revendications

1. Copolymère comprenant :
au moins un fluoromonomère choisi dans le groupe constitué par le tétrafluoroéthylène et l'hexafluoropropylène ; et
un composé vinylique polymérisable contenant une liaison amide,
le copolymère contenant une unité de fluoromonomère dans une quantité de 55 à 15 % molaire de toutes les unités monomères et une unité de composé vinylique polymérisable contenant une liaison amide dans une quantité de 45 à 85 % en moles de toutes les unités monomères.

2. Le copolymère selon la revendication 1,
dans lequel le rapport en moles de l'unité de fluoromonomère à l'unité de composé vinylique polymérisable contenant une liaison amide (l'unité de fluoromonomère/unité de composé vinylique polymérisable contenant une liaison amide) est dans le domaine de 0,08 à 1,50.

3. Le copolymère selon la revendication 1 ou 2,
dans lequel le composé vinylique polymérisable contenant une liaison amide est un composé N-vinyl-lactame.

4. Le copolymère selon la revendication 1, 2 ou 3,
dans lequel le composé vinylique polymérisable contenant une liaison amide est un composé représenté par la formule suivante : 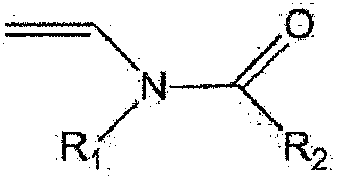
dans laquelle R¹ et R² sont chacun indépendamment H ou un groupe alkyle en C1-C10.

5. Composition comprenant :
un agent hydrophilisant comprenant un polymère fluoré ayant un angle de contact avec l'eau de 50° ou moins, mesuré selon la méthode indiquée dans la description ; et
un polymère autre que l'agent hydrophilisant ;
dans lequel le polymère fluoré est un copolymère selon la revendication 1, 2, 3 ou 4.

6. La composition selon la revendication 5,
dans laquelle le polymère fluoré a un point de ramollissement de 70°C à 200°C.

7. La composition selon la revendication 5 ou 6,
dans laquelle le polymère fluoré a une teneur en fluor de 5 % en masse ou plus.

8. La composition selon la revendication 5, 6, ou 7, qui est une composition pour un film de polymère poreux.

9. La composition selon la revendication 5,
dans laquelle le polymère est un polyfluorure de vinylidène ou un copolymère contenant une unité de fluorure de vinylidène.

10. Film de polymère poreux comprenant la composition selon la revendication 5, 6, 7, 8 ou 9.

11. Le film de polymère poreux selon la revendication 10, qui a un angle de contact dans l'eau de 55° ou moins tel que mesuré selon la méthode indiquée dans la description.

12. Agent hydrophilisant, comprenant un copolymère selon la revendication 1, 2, 3 ou 4.
